# EUROPÄISCHE PATENTSCHRIFT

(11) **EP 3 933 354 B1**
(45) Veröffentlichungstag und Bekanntmachung des Hinweises auf die Patenterteilung: **19.10.2022**
(21) Anmeldenummer: 20183104.7
(22) Anmeldetag: 30.06.2020
(51) Int. Cl.: G01G 19/393

(54) **VERBESSERTE ÜBERWACHUNG VON KOMBINATIONSWAAGEN DURCH EINEN 3D-SENSOR**
IMPROVED MONITORING OF COMBINATION SCALES USING A 3D SENSOR
SURVEILLANCE AMÉLIORÉE DES BALANCES DE COMBINAISON AU MOYEN D'UN CAPTEUR 3D

(43) Veröffentlichungstag der Anmeldung: 05.01.2022
(73) Patentinhaber: Multipond Wägetechnik GmbH, 84478 Waldkraiburg (DE)
(72) Erfinder: HIEN, Tobias, 84567 Perach (DE); HÜBEL, Florian, 84478 Waldkraiburg (DE); SCHULNA, Lars, 84478 Waldkraiburg (DE); WAGNER, Robert, 84559 Kraiburg a. Inn (DE); ZECK, Wolfram C., 84453 Mühldorf (DE)
(74) Vertreter: Prüfer & Partner mbB Patentanwälte · Rechtsanwälte

(56) Entgegenhaltungen:
- EP-A1- 2 887 029
- EP-B1- 2 887 029

## Beschreibung

Die vorliegende Anmeldung beschäftigt sich mit einer verbesserten Befüllungsvorrichtung für eine Kombinationswaage mit einer Überwachung durch einen 3D-Sensor.

In der Anlagentechnik, insbesondere in der Lebensmittelindustrie, ist die Handhabung von Produkten von äußerster Relevanz, da Produkte gewogen und entsprechend verpackt werden müssen, bevor sie in den Verkauf kommen. Produkte werden zwischen und innerhalb von verschiedenen Maschinen transportiert, in diesen gelagert, auf diesen verteilt, sortiert, verarbeitet, gewogen, usw. Hierbei gibt es unterschiedliche Transportvorrichtungen, welche jeweils an die Produkteigenschaften und an die spezifische Anwendung angepasst sind.

Insbesondere in der Lebensmittelindustrie und Lebensmittel verarbeitenden Industrie besteht die Notwendigkeit zusätzlicher Informationen über die Beschaffenheit und die Verteilung von Produkten an/auf bestimmten Stellen oder Flächen, was für einen reibungslosen Betrieb und vor allem einen sicheren Betrieb der Anlage erforderlich ist. Häufig besteht zudem die Notwendigkeit, zusätzliche Informationen über die Verteilung der Produkte zu bestimmten Stellen oder Flächen, beispielsweise Produktgeschwindigkeiten, transportierte Volumina oder Ähnliches zu erlangen. Hierbei werden verschiedene Sensoren mit unterschiedlichen Messprinzipien eingesetzt, welche beispielsweise Farbe, Materialeigenschaften und/oder Geschwindigkeit bezogen auf einen Messpunkt oder eine Fläche anzeigen. Anhand der gewonnenen Informationen lassen sich insbesondere in einer Mehrkopfwaage und einer entsprechenden Befüllungsvorrichtung Rückschlüsse auf den Produktfluss und die Produktverteilung ziehen, bestimmte Entscheidungen treffen, Daten ermitteln, und die Effizienz des Prozesses überwachen. Die Information darüber, wieviel Produkt welcher Art und an welcher beobachteten Stelle vorhanden ist, ist ein Ist-Zustand eines geregelten Prozesses. Es können dann verschiedene Regelungsmechanismen zum Einsatz kommen, welche bei Abweichung der Produkt- und Umgebungseigenschaften entsprechend reagieren können. Ein kontrollierbarer Ablauf kann dann sichergestellt werden.

Aus dem Stand der Technik bekannt ist das Dokument EP 2 887 029 A1. Dieses Dokument offenbart eine Befüllungsvorrichtung für eine Wägeeinrichtung, in der wenigstens ein Sensor zum Erfassen und Weiterleiten von Produktbelegungsinformationen auf der Transportfläche vorhanden ist. Der wenigstens eine Sensor ist hier dazu eingerichtet, wenigstens eine Teilfläche der Transportfläche zu erfassen, und eine entsprechende Steuervorrichtung kann die von einem Sensor erfasste Fläche virtuell in eine Mehrzahl von Sektoren und Zonen unterteilen. Die Auswertung erfolgt über Zonen und Sektoren, zudem können auch überlappende Erfassungsbereiche vorgesehen werden.

Das Dokument DE 4 230 626 A1 offenbart ein Verfahren zur Volumenstrommessung von Schüttgütern auf Fördereinrichtungen, insbesondere Bandförderern. Hier wird durch eine kontinuierliche Bestimmung der Kontur der Oberfläche des Schüttguts eine berührungsfreie Entfernungsmessung vorgenommen, so dass ein Produktstrom messbar ist.

Weiterhin ist im Stand der Technik das Dokument EP 2 827 114 A1 bekannt, welches eine Kombinationswaage mit Kameras offenbart, wobei durch Bildbearbeitung die Belegung von Produkten und Bewegungen von Produkten auf Komponenten der Kombinationswaage erfasst und ausgewertet werden können, beispielsweise auf einem Verteilteller oder Dosierrinnen. Anhand vorbestimmter Punkte, beispielsweise einer Ecke einer Dosierrinne, wird die Referenzierung anhand vorbestimmter Punkte vorgenommen.

Im Stand der Technik weiterhin bekannt ist das Dokument EP 3 098 580 A1, das ebenfalls eine Kombinationswaage zeigt, an welcher mindestens zwei Kameras angebracht sind, welche die Dosiereinrichtung von oben und stromabwärts beobachten, um die Dosiereinrichtung möglichst ganz zu überblicken.

Ferner im Stand der Technik bekannt ist das Dokument EP 3 101 398 A1, welches eine Kombinationswägevorrichtung offenbart, in welcher für eine Vielzahl von Regionen entlang der Förderrichtung der Status des Produktstroms für jede der Regionen gemessen wird, und der Antrieb der entsprechenden Beschickungsvorrichtung für die Kombinationswaage anhand dieser Messwerte gesteuert wird. Eine spezielle Ausrichtung des Sensors bzw. der Messvorrichtung ist hier allerdings nicht offenbart.

Im Stand der Technik tritt das allgemeine Problem auf, dass die Produkte häufig nicht homogen sind, denn einzelne Produkte können körnig bis grobkörnig sein, die Form kann unregelmäßig sein und physikalische Eigenschaften können schwanken. Es können beispielsweise Produkte mit unterschiedlichem Wassergehalt bzw. mit Hohlräumen vorhanden sein, was deutliche Änderungen der Produkteigenschaften nach sich zieht. Dies erschwert eine Detektion des realen Produktflusses.

Bei einer Verteilung von Produkten für die Beschickung einer Mehrkopfwage ist ferner das Verhalten der Förderbarkeit äußert unvorhersehbar, beispielsweise durch Anhaften, Verkeilen, Verklumpen der einzelnen Produktteile.

Dies führt dazu, dass die gleichmäßige Produktverteilung auf dem Verteilteller und in Dosierrinnen einer Mehrkopfwaage erheblich gestört werden kann, es können hier Staus auftreten und beispielsweise können in einzelnen Dosierrinnen keine Produkte mehr befördert werden. Daher entstehen lokale Anhäufungen von Produkten oder Lücken, und, wie bereits beschrieben, kann eine Dosierrinne komplett verstopfen oder aber leer laufen, wenn ein entsprechendes Element auf dem Verteilteller blockiert ist. Auch könnte der Auslauf des Verteiltellers durch ein anhaftendes Produkt blockiert sein. Durch derart entstehende Fehlbelegungen bzw. Störungen von Teilen der Mehrkopfwaage wird auch die Produktzufuhr auf allen Dosierrinnen gestört, und auch die Verteilmenge auf dem Verteilteller kann gestört werden (wenn durch Blockierung Teile bzw. Teilflächen des Verteiltellers temporär nicht mehr zur Förderung verwendet werden können). Beispielsweise kann die Anhäufung an einem Rinnenende einen komplett befüllten Verteilteller vortäuschen und dessen Wiederbefüllung kann komplett verhindert werden, was dann auch zur Unterversorgung aller anderen Dosierrinnen führen würde.

Problematisch ist hierbei, dass die Auswirkungen solcher Störungen erst erkannt werden, wenn bereits eine deutliche Störung vorliegt, und dies wird manchmal erst erkannt, wenn die transportierten und im Wägebehälter ankommenden Mengen immer kleiner werden. Das Steuerungssystem einer Mehrkopfwaage kann dann versuchen, die Parameter, die die Produktzufuhr steuern, zu ändern, um einem Produktmangel entgegenzuwirken. Schwankungen in der Leistung und Ungenauigkeiten der Waage sind die Folge. Zudem ist es möglich, dass bei zu vollen Dosierrinnen Teile seitlich herunterfallen.

Bei Kombinationswaagen können solche Schwankungen und Ungenauigkeiten allerdings auch zu einer Unmöglichkeit in der Kombinationsfindung führen, was dann zu häufigem Nachdosieren, Überfüllen, Auswürfen und Leistungseinbrüchen führt, bis zum vollständigen Stillstand.

In so einem Fall erfolgt eine Fehlermeldung und ein manueller Eingriff wird erforderlich - ein Bediener muss alle Teile der Waage, in welchen Produkt gefördert wird, überprüfen, und eventuell Fehler beheben (beispielsweise den Verteilteller oder Dosierrinnen reinigen). Die Waage kann dann erst nach einer gewissen Zeit ihren normalen Betrieb wieder aufnehmen.

Es ist also eine Aufgabe der vorliegenden Erfindung, den Produktfluss auf einer Mehrkopfwaage und einer entsprechenden Befüllungsvorrichtung weiter zu automatisieren und zu optimieren, so dass ein sichererer und zuverlässigerer Betrieb der Waage möglich wird.

Diese Aufgabe wird gelöst durch eine Befüllungsvorrichtung gemäß Anspruch 1 sowie ein Verfahren gemäß Anspruch 14. Weitere vorteilhafte Ausgestaltungen der vorliegenden Erfindung sind Gegenstand der abhängigen Ansprüche.

Eine Befüllungsvorrichtung gemäß der vorliegenden Erfindung weist eine Transportfläche (beispielsweise Verteilteller, Dosierrinnen, Vorratsbehälter einer Kombinationswaage) auf, welche von einer Beschickungsvorrichtung mit Produkten versorgt wird. Ferner weist die Befüllungsvorrichtung wenigstens einen 3D-Sensor auf, zum Erfassen und Weiterleiten von Produktbelegungsinformationen auf der Transportfläche, der Beschickungsvorrichtung und/oder anderer Flächen (wie beispielsweise ein Abstreifring, eine Sonde, ein Halter und/oder ein Metalldetektor). Der wenigstens eine Sensor ist dazu angepasst, zumindest eine Teilfläche der Transportfläche und/oder anderer Flächen zu erfassen. Die Steuervorrichtung ist dazu ausgebildet, die von wenigstens einem Sensor erfasste Fläche virtuell in eine Mehrzahl von Sektoren zu unterteilen, um Produktbelegungsinformationen einem Sektor zuzuordnen, wobei der Sektor virtuell in mehrere Zonen unterteilt werden kann. Eine Auswerteeinheit ist dazu angepasst, Daten des Sensors auszuwerten.

Der 3D-Sensor ist ferner dazu angepasst, den Abstand zu jedem Messpunkt, sowie den jeweiligen Einfallswinkel, unter welchem jeder Messpunkt, der erfasst wird, gemessen wird, zu bestimmen. Von einem Meßpunkt werden also eine x-Koordinate und eine y-Koordinate sowie ein Winkel gemessen. Hierzu wird das Senklot bestimmt, das heißt ein Punkt, an dem eine Linie, die orthogonal zur beobachteten Fläche ist und diese mit dem Sensor verbindet, die geringstmögliche Länge aufweist. Bei Kenntnis darüber, welche geometrischen Eigenschaften die beobachtete Fläche aufweist, kann der Winkel relativ zu diesem Senklot für jeden Punkt berechnet werden.

Der 3D-Sensor kann auch Vorratsbehälter einer Kombinationswaage überblicken und analysieren.

Ferner ist die Befüllungsvorrichtung dazu angepasst, eine Einteilung in Sektoren und Zonen auch dynamisch vorzunehmen, in Abhängigkeit von mindestens einer Einflussgröße. Die Aufteilung in Sektoren und Zonen kann beliebig sein und kann variabel gemäß der Produktbelegungsinformationen und Steuerung der Anlage erfolgen. Sollten mit einem 3D-Sensor nicht alle Zonen und Sektoren abgedeckt werden, können auch mehrere 3D-Sensoren zur Anwendung kommen. Dies kann z.B. dann der Fall sein, wenn die Beschickungseinheit, welche das Produkt dem Verteilteller zuführt, aus Sicht des 3D-Sensors einige Dosierrinnen verdeckt. Es können also bestimmte Zonen und Sektoren von mehreren 3D-Sensoren erfasst werden, bei der Berechnung der Produktbelegung können dann auch Informationen mehrerer 3D-Sensoren berücksichtigt werden.

Die Verwendung eines 3D-Sensors ermöglicht es, dass nicht nur Flächeninformationen, sondern auch Tiefeninformationen erlangt werden können. Dies ist dann von Interesse und von Vorteil, wenn sich Produkte nicht direkt unterhalb des Sensors befinden und die Dosierinne geneigt ist. Dadurch, dass der erfindungsgemäße 3D-Sensor nicht nur einen Abstand zum Messpunkt, sondern auch einen Einfallswinkel, unter welchem ein entsprechender Messpunkt der zur erfassenden Fläche gemessen wird, messen kann, kann bei Produkten oder Produktteilen, welche nicht direkt unter dem Sensor liegen, sondern in einem gewissen Winkel von diesem entfernt sind, eine die Auswerteeinheit eine korrigierte Höhe bestimmt werden, welche die Bestimmung eines korrekten Produktvolumens erlaubt. Es erfolgt also eine Korrektur der gemessenen Belegungshöhe an entsprechenden Punkten des Messfelds gemäß dem von dem Senklot abweichendem Winkel und Berechnung des korrigierten Volumens in entsprechenden Sektoren und Zonen. So kann das tatsächliche Volumen eines Produktes bestimmt werden.

Eine dynamische Einteilung in Sektoren und Zonen ermöglicht es ferner, dass die Sicherheit der Detektion verbessert wird, beispielsweise können feinere Zonen und Sektoren in solchen Bereichen gebildet werden, in welchem die Produktdichte größer ist und/oder in welchen eine Störung am kritischsten wäre. Dadurch können in denjenigen Sektoren besonders viele Zonen vorgesehen werden, in welchen sich das Produkt am schnellsten bewegt und in welchen somit eine höhere Auflösung nötig ist.

Vorzugsweise ist die Einflussgröße ein Charakteristikum des transportierten Produkts wie Produktdichte oder äußere Produktabmessung. Dadurch ist es beispielsweise möglich, dass bei größeren Produktteilen wie beispielsweise Pilzen oder Salatblättern größere Zonen und/oder Sektoren gebildet werden, bei feineren Produkten wie beispielsweise Weizenkörnern allerdings deutlich kleinere Zonen und/oder Sektoren.

Vorzugsweise kann die Einflussgröße auch die Vibrationsfrequenz und/oder Vibrationsamplitude von Teilen der Transportwege sein, so wie beispielsweise des Verteiltellers oder der Dosierrinnen. In Bereichen, in welchen die Vibrationsfrequenz am größten ist und in welchen die Produkte am schnellsten bewegt werden, kann also eine Aufteilung in kleinere Zonen und/der Sektoren erfolgen.

Generell kann eine automatische Einteilung in Sektoren und Zonen auch anhand vordefinierter Kriterien erfolgen, beispielsweise durch Erkennung der Arten von zusammengehörenden Elementen (z.B. mehrere Dosierrinnen...) und eine Zuordnung von Sektoren zu den jeweiligen Elementen, dann Unterteilung in eine festgelegte Zahl an Zonen (z.B. 10).

Zonen können unterschiedlich eingeteilt werden, um diverse Möglichkeiten der ungleichmäßigen Belegung erfassen zu können, beispielsweise quer zur Längsachse über die gesamte Breite einer Dosierrinnen oder quer zur Längsachse, aber mit separaten Zonen links/rechts der Längsachse, oder aber Zonen als Teile von rotationssymmetrischen Elementen, z.B. eines Verteiltellers (z.B. zwei Zonen in Form eines Viertelkreises, eine Zone in Form eines Halbkreises).

Vorzugsweise ist die Einteilung in Zonen und/oder Sektoren durch einen Benutzer beeinflussbar.

Dies kann beispielsweise durch eine Eingabe- und oder Anzeigeeinheit an der Multifunktionswaage stattfinden. Beispielsweise kann hier ein 2D-Bild der Transportfläche aus der Anzeigeeinheit entsprechend ausgewählt werden und in Zonen unterteilt werden und/oder die Auswahl kann über einen externen Editor erfolgen. Anhand verschiedener hinterlegter Algorithmen für bestimmte Produkte kann die Einteilung in Zonen und/oder Sektoren auch entsprechend abgespeichert werden - beispielsweise in Anhängigkeit von einem Produkt. Hierbei spielt für die Größe der Zonen und/oder Sektoren die Produktbeschaffenheit (Größe, Feuchtigkeitsgehalt, Klebrigkeit ...) eine Rolle, ferner die Form der Produkte und die Anfälligkeit dafür, dass die Produkte verklumpen oder verkeilen.

Weiter vorzugsweise ist an der Transportfläche mindestens eine Positioniermarke vorgesehen und der Sensor ist dazu angepasst, die mindestens eine Positioniermarke zu erkennen. Positioniermarken können beispielsweise an Enden der Dosierrinnen und in der Mitte des Verteiltellers vorgesehen sein, und der Sensor bzw. die Steuervorrichtung können somit die Einteilung von Zonen und/oder Sektoren anhand dieser Positioniermarken vornehmen. Auch kann beispielsweise die relative Position von Verteilteller und/oder Dosierrinnen zur Abwurfvorrichtung berechnet werden.

Solche Positioniermarken können selbständig erkannt werden, so dass die Befüllungsvorrichtung auch erkennen kann, ob sämtliche Anlagenteile richtig montiert sind bzw. vorhanden sind oder nicht. Sollte ein Teil falsch montiert, aber trotzdem noch funktionstüchtig sein, kann hier ein Korrekturfaktor ermittelt werden, mit welchem trotz falscher Montage immer noch korrekte Messwerte bestimmt werden können. Alternativ können relevante Punkte erkannt werden, beispielsweise Enden der Dosierrinnen oder die äußeren Ecken der Zargen von Vorratsbehältern.

Weiter vorzugsweise ist die Auswerteeinheit dazu angepasst, das Produktvolumen in mindestens einem Vorratsbehälter, auf Boden und Wänden mindestens einer Dosierrinne, auf dem Verteilteller, auf der Beschickungsvorrichtung und anderen Teilen einer Kombinationswaage zu bestimmen.

Weiter vorzugsweise ist die Auswerteeinheit dazu angepasst, eine Belegungshöhe der einzelnen Produkte auf der Transportfläche und daraus ein Produktvolumen in den einzelnen Zonen und/oder Sektoren zu bestimmen.

Dadurch werden ein 2D-Bild und ein 3D-Bild erzeugt, und die Identifizierung von Produkten kann anhand beider Bilder erfolgen.

Weiter vorzugsweise ist die Auswerteeinheit dazu angepasst, für die Bestimmung der Belegungshöhe und des Produktvolumens in den einzelnen Zonen und/oder Sektoren einen entsprechenden Winkel des entsprechenden Messpunktes zu berücksichtigen. Es wird daher der Winkel gemessen, welcher das Einfallslot des Sensors auf der darunterliegenden Fläche und die Gerade zwischen Sensor und Produkt bzw. einer Produktecke einschließen.

Durch die Messung dieses Winkels(wie oben beschrieben) ist es möglich, eine Korrektur der gemessenen Belegungshöhe entsprechend den jeweiligen Punkten des Messobjekts gemäß dem vom Senklot abweichenden Winkel zu korrigieren, und somit ein tatsächliches Volumen des Produktes auf einzelne Zonen und/oder Sektoren zu bestimmen. Durch Ermittlung des Winkels kann mit den Gesetzen der Trigonometrie und dem Satz des Pythagoras eine korrigierte Höhe ermittelt werden. Daraus kann dann ein tatsächliches Volumen bestimmt werden.

Weiter vorzugsweise wird für die Bestimmung des Produktvolumens zusätzlich das Produktgewicht berücksichtigt. Das Produktgewicht wird durch Wiegen bestimmt, beispielsweise in einer Dosierrinne, auf dem Verteilteller oder aber anschließend in einem Vorratsbehälter oder Wägebehälter. Es kann auch das Produktgewicht in einem Vorratsbehälter bestimmt werden, indem das wandernde Produkt welches eine Dosierrinne in Richtung Vorratsbehälter verlässt, gemessen wird. Bei festen (also nicht flüssigen Produkten) gibt es Zwischenräume, die beispielsweise bei Bonbons, Erbsen oder Gummibärchen relativ konstant sein können, oder aber wegen der unregelmäßigen Form und Masse der Einzelstücke sehr unterschiedlich sein können, wie beispielsweise bei Hähnchenschenkeln oder Pilzen oder bei Einzelstücken, die in unterschiedlichen Positionen zueinander zum Liegen kommen, wie beispielsweise bei Salatblättern oder Schokoladenriegeln. Dies führt zu unterschiedlichen Hohlräumen zwischen den Einzelstücken und zu einer Schwankung der mittleren Dichte des Schüttguts. Um allerdings immer eine sichere Aussage über eine Produktmasse von einem Zufuhrelement in das nächste zu bekommen (also beispielsweise von einem Verteilteller in eine Dosierrinne, von einer Dosierrinne, in einen Wägebehälter, usw....) müssen Steuerparameter der Zufuhrelemente entsprechend dem tatsächlichen Schüttgewicht angepasst werden. Die Bestimmung des tatsächlichen aktuellen Schüttgewichts kann beispielsweise durch die Bestimmung des Produktvolumens im Vorratsbehälter und die anschließende Wägung im Wägebehälter erfolgen, oder das Produktvolumen kann auf dem Verteilteller bestimmt werden und unter dem Verteilteller ist eine Vorwaage eingebaut, welche eine Wägung vornimmt. So können bestimmte Werte für ein Produktvolumen, wie es durch den Sensor bestimmt wird, und der Produktmasse, wie sie durch eine solche Wägeeinrichtung bestimmt wird, immer miteinander korreliert werden, und es kann somit ein mittlere Produktdichte bestimmt werden, welche den Hohlraumanteil berücksichtigt. So können für nachfolgende Messungen genauere Werte bestimmt werden

Weiter vorzugsweise ist die Auswerteeinheit ferner dazu angepasst, die Produktbewegungsgeschwindigkeit, vorzugsweise in einzelnen Zonen und/oder Sektoren zu bestimmen. Hierbei erkennen der Sensor bzw. die Auswerteeinheit beispielsweise einen bestimmten Produktbereich bis hin zu einem einzelnen Produktteil (beispielsweise durch Vorgabe von Aussehen der Stücke durch Definition wie Maßangaben, Zeichnung oder Aufnahmen von Musterstücken, Auswertung des 2D/3D-Bildes und Identifizierung von Einzelstücken oder Anwendung neuronaler Netze und adäquaten Machine Learning- Modellen wie z.B. Deep Learning, Convolutional Neural Networks zur Erkennung von Stücken durch z.B. Kantendetektion, Eckenerkennung, Texturklassen, Objektklassen und Schätzung der Anzahl von Objekten auf Sektoren und Zonen) und verfolgt dieses über einen bestimmten Weg und berechnet daraus die Produktbewegungsgeschwindigkeit.

Die Produktbewegungsgeschwindigkeit ist eine weitere Kenngröße, welche an eine Steuereinrichtung weitergegeben werden kann, was zu einer Verbesserung der entsprechenden Wägequalität führt.

Weiter vorzugsweise können auch Schwankungen in der Produktbewegung und/oder den Produkteigenschaften detektiert werden.

Es kann entweder die Identifizierung von einzelnen Objekten und die Messung deren zeitlichen Voranbewegens erfolgen, beispielsweise die Bewegung einer einzelnen Praline in einer Dosierrinne; es können aber auch Anhäufungen oder Lücken bei nicht vereinzelt auftretenden Produkten festgestellt werden und die Messung deren zeitlichen Vorankommens kann erfolgen. Beispielsweise kann durch Bilddatenauswertung ein Produktberg von Hähnchenkeulen oder ein Produkttal von Bonbons gemessen werden. Auch kann eine Bestimmung des Mengendurchsatzes (beispielsweise Stück pro Sekunde) oder des Massendurchsatzes (beispielsweise Gramm pro Sekunde) oder des Volumendurchsatzes (beispielsweise Liter pro Sekunde) in beobachteten Zonen und/oder Sektoren erfolgen.

Weiter vorzugsweise ist die Auswerteeinheit dazu angepasst, die Formen/Konturen von Produkten, die Farben von Produkten und/oder die Oberflächen von Produkten zu detektieren und zu analysieren. Weiter vorzugsweise sind diese Formen/Konturen von Produkten, so wie Farben von Produkten oder Oberflächenstrukturen von Produkten in einer Speichereinheit hinterlegbar, wodurch ein Vergleich der gespeicherten Werte und der gemessenen Werte für die Konturen von Produkten, Farben von Produkten sowie Oberflächenstrukturen von Produkten zur Detektion von Fremdkörpern im Produktstrom erfolgen kann.

Bei der Analyse von Formen/Konturen werden die Bilder des mindestens einen Sensors auf das Vorhandensein von Konturen, welche der gesuchten Form entsprechen, untersucht. Es können auch 3D-Bilder auf eine räumliche Form hin untersucht werden. Wenn die tatsächlich erkannte Form mit der zu erkennenden Form (welche vorgegeben ist) mehr als ein festlegbares Mindestmaß übereinstimmt, wird der Fremdkörper mit der bestimmten Form als erkannt angesehen und eine Meldung dazu generiert.

Produkte und/oder Fremdkörper sind durch einen Vergleich mit hinterlegten Bildern oder einer Bildauswertung, optional mithilfe von künstlicher Intelligenz, erkennbar und analysierbar.

Bei stückigen Produkten wie zum Beispiel Hähnchenschenkeln oder Pralinen, kann eine Erkennung der einzelnen Stücke im Messfeld des mindestens einen 3D-Sensors geschehen durch Vorgabe von Aussehen der Stücke durch Definition (z.B. Maßangaben, Zeichnung, Aufnahmen von Musterstücken), und/oder die Auswahl des 2D- und 3D-Bildes zur Identifizierung von Einzelstücken bei Produkten ohne Überlappung sowie auch bei Überlappung.

Auch dies kann geschehen durch Vorgabe von Aussehen der Stücke durch Definition wie Maßangaben, Zeichnung oder Aufnahmen von Musterstücken, Auswertung des 2D/3D-Bildes und Identifizierung von Einzelstücken oder Anwendung neuronaler Netze und adäquaten Machine Learning- Modellen wie z.B. Deep Learning, Convolutional Neural Networks zur Erkennung von Stücken durch z.B. Kantendetektion, Eckenerkennung, Texturklassen, Objektklassen und Schätzung der Anzahl von Objekten auf Sektoren und Zonen) Dies ermöglicht nicht nur die Erkennung von Fremdkörpern, sondern dies ermöglicht auch ein Zählen der einzelnen Produkte. Bei der Erkennung von Fremdkörpern mit einer bestimmten Farbe kann z.B. das Bild des Sensors auf einen spektralen Inhalt untersucht werden, so dass bestimmte Farben von verschiedenen Produkten herausgefiltert werden können, und dies kann mit typischen Inhalten von Bildern ohne Fremdkörper verglichen werden. Wenn ein spektraler Inhalt der Bilder ein festlegbares Mindestmaß überschreite (beispielsweise bei Vorhandensein von pelzigen Kleintieren zwischen Bonbons), wird der Fremdkörper mit der bestimmten Farbe als erkannt angesehen und es wird eine entsprechende Fehlermeldung ausgegeben. Wenn Fremdkörper mit einer bestimmten Form erkannt werden sollen, werden die Bilder auf das Vorhandensein der Konturen, welche der gesuchten Form entsprechen, untersucht. Wenn die erkannte Form ein festlegbares Mindestmaß aufweist, wird der Fremdkörper mit der bestimmten Form als erkannt angesehen und eine Fehlermeldung dazu generiert. Beispielsweise können hier so Konturen von Fliegen oder Schmutzpartikeln eingespeichert werden, und wenn sich diese nicht mit einer Kontur von den Pilzen decken, können hier Fehlermeldungen ausgegeben werden. Gleiches ist möglich bei der Messung der Oberflächenstruktur.

Eine Bilderkennung kann auch mit Hilfe von künstlicher Intelligenz durchgeführt werden, hier werden künstliche neuronale Netzwerke dazu trainiert, verschiedene Produkte voneinander zu unterscheiden. In einer Lern- bzw. Erkennungsphase werden verschiedene Bilder eingelesen und ein entsprechendes Charakteristikum zugeordnet. Hier können Parameter eines künstlichen neuronalen Netzwerks so antrainiert werden, dass für ein bestimmtes Produkt Fremdkörper immer zuverlässiger erkannt werden.

Weiter vorzugsweise sind Konstruktionszeichnungen eines Bauteils (beispielsweise des Verteiltellers, einer Dosierrinne usw.) der Befüllungsvorrichtung in einem Speicher hinterlegbar, beispielsweise als 3D-pdf, als STEP-Datei oder einem digitalen Zwilling. Relevante Punkte der erfassten Fläche bzw. Messfelds können erkannt und bestimmt werden, und in einer realen Wägesituation kann das Vorhandensein und/oder die richtige Positionierung von Teilen der Befüllungsvorrichtung und der Kombinationswaage automatisch detektiert werden. Fehlt beispielsweise eine Dosierrinne, würde der Sensor das erkennen und eine entsprechende Fehlermeldung ausgeben. So kann auch erkannt werden, ob/ wie einzelne Bauteile der Kombinationswaage fehlen oder verschoben sind, ob die richtigen Bauteile verbaut sind (beispielsweise könnte eine Dosierrinne nach dem Reinigen durch ein falsches Teil ersetzt worden sein) und ob vorgeschaltete / nachgeschaltete Anlagen (z.B.Förderbänder...) richtig positioniert sind. Auch Baugruppen von Teilen und optional vorgeschaltete bzw. nachgeschaltete Anlagen können erkannt werden.

Weiter vorzugsweise ist die Steuervorrichtung dazu angepasst, in Abhängigkeit von der von dem mindestens einen Sensor gemessenen Produktbelegung eine Regelung der Steuerparameter der Befüllungsvorrichtung wie beispielsweise Dosierzeiten und Dosieramplituden vorzunehmen. Hierdurch kann das System schneller betrieben werden, und ferner kann die Sicherheit der Befüllungsvorrichtung entsprechend erhöht werden. Hier ist es beispielsweise auch möglich, dass bei erkannten Fehlsituationen eine entsprechende Fehlermeldung ausgegeben wird oder dass die Befüllungsvorrichtung sogar komplett gestoppt wird.

Ein erfindungsgemäßes Verfahren umfasst die folgenden Schritte:
a) Verwenden von mindestens einem 3D-Sensors;
b) Erkennen der Positionierung des mindestens einem 3D-Sensors relativ zur Befüllungsvorrichtung
c) Einteilung der Transportfläche in Sektoren (3) und/oder Zonen (4);

In einem Schritt d) wird mindestens ein Teil einer Befüllungsvorrichtung, beispielsweise ein Verteilteller, eine Dosierrinne oder ein Wägebehälter mit einem 3D-Sensor analysiert, wenn kein Produktfluss vorhanden ist. Somit werden praktisch die Daten der unbelegten Anlage eingelesen, und es kann später erkannt werden, ob Produkte oder Störelemente vom Sensor detektiert werden.

In einem Schritt e) wird der Produktfluss auf mindestens einem Teil der Befüllungsvorrichtung analysiert, beispielsweise auf einem Verteilteller, einer Dosierrinne oder einem Wägebehälter, wobei hier der 3D-Sensor herangezogen wird.

In einem Schritt f) werden die mit dem 3D-Sensor gemessenen Daten der Schritte d) und e) verglichen, es wird eine Plausibilitätsprüfung der in Schritt e) gemessenen Werte durchgeführt.

Somit kann sichergestellt werden, dass keine Störelemente vorhanden sind, und dass eine entsprechende Produktbelegung vorhanden ist. Wenn beispielweise die im Schritt d) und e) gemessenen Daten gleich sind, so erkennt das System, dass beispielsweise auf einer Dosierrinne kein Produktstrom mehr fließt und kann entsprechende Maßnahmen ergreifen oder aber eine Fehlermeldung ausgeben.

In Schritt g) wird eine Produktverteilung, ein Volumen und/oder Gewicht der transportierten Produkte bestimmt.

Dies geschieht auch mit Hilfe der oben beschriebenen Winkelkorrektur.

Vorzugsweise umfasst das erfindungsgemäße Verfahren ferner die folgenden Schritte:
h) Zuordnen der in Schritt g) erhaltenen Informationen vorbestimmten Sektoren und Zonen,
i) Berechnen relevanter Merkmale der Produktverteilung aus diesen Informationen, wie Durchflussgrößen für Masse und Volumen, mittlere Dichte, Schwankungen der Produktverteilung wie Lücken oder Anhäufungen, Erkennen von Einzelstücken, Fremdobjekten, Störkanten, Vorhandensein bestimmter Merkmale wie Farbe, Form, Oberflächenstruktur, Anzahl.
j) Regelung der Steuerparameter anhand dieser Informationen für eine kontrollierte Produktverteilung

Somit kann die Steuerung der ganzen Waage auf Störungen usw. schnell reagieren.

Vorzugsweise werden in diesem Verfahren, wenn in Schritt d) an bestimmten detektierten Punkten/Positionen eine größere Abweichung innerhalb einer festgelegten, kurzen Zeitspanne Δ1t detektiert wird, die betroffenen Punkte/Positionen in den Zonen und/oder Sektoren nicht für die Auswertung des Schritts d) verwendet. Somit kann beispielsweise vermieden werden, dass der Arm eines Bedieners, welcher beispielsweise kurz in eine Dosierrinne greift, Störungen im Betreib der Waage hervorruft.

Ferner werden in Schritt d) und /oder e) Abweichungen der Distanzen zwischen Sensor und einzelnen Messpunkten über die Zeit bestimmt, und wenn eine Zeitspanne Δt1 überschritten wird, daraus ein Versatz berechnet wird,
und wenn der Versatz einen vorbestimmten Mindestwert nicht überschreitet, ein Korrekturwert für die Distanz zwischen dem Sensor und einem Messpunkt bestimmt wird und für folgende Messungen verwendet wird,
und wenn der Versatz einen vorbestimmten Mindestwert überschreitet, entsprechende Messpunkte für folgende Messungen nicht mehr berücksichtigt werden.

Hier kann auch zwischen mehreren Störelementen unterschieden werden:
Feste Störelemente z.B. Halterungen, verursachen auf den Sektoren/Zonen, in welchen sie sichtbar sind, einen Versatz der Nullwerte. Bei einem einstellbaren Mindestwert für den Versatz werden sie dann als "Störelemente" erkannt, als solche angezeigt und die betroffenen Punkte der Sektoren/Zonen nicht für Auswertungen verwendet und gesondert behandelt.

Wenn der Versatz einen vorbestimmten Mindestwert nicht überschreitet, wird von einem geänderten Nullwert ausgegangen, z.B. die Dosierrinnen sind verschmutzt oder der Verteilteller ist noch nicht leer. Ein Nullversatz wird dann entsprechend angezeigt und für nachfolgende Messungen berücksichtigt, oder über das weitere Vorgehen muss entschieden werden (z.B.Entleeren....)

Kurzzeitige, nur zeitweilig vorhandene Störelemente, z.B. der Arm eines Bedieners, welcher ein Produkt vom Verteilteller entfernt, werden auch sofort erkannt und beispielsweise während deren Bewegung ignoriert (und die betroffenen Punkte der Sektoren/Zonen nicht für Auswertungen hergenommen werden), oder wenn die Störelemente eine vorbestimmte Zeit dieselbe Position beibehalten, wird ein entsprechender Versatz bestimmt.

So kann beispielsweise, wenn ein Bediener der Waage mit seiner Hand an den Produktteller fasst und dessen Arm vom Sensor detektiert wird, dies tun, ohne dass eine Fehlermeldung ausgegeben wird, weil entsprechende Werte einfach ignoriert werden.

Vorzugsweise wird in den Schritten d) und e) ein Winkel jedes Messpunkts relativ zum Senklot des Sensors sowie eine Distanz bestimmt, und durch Vergleich der gemessenen Distanzen zwischen mehreren Messpunkten können vorzugsweise Produktabmessungen und/oder Leerräume zwischen Produkten erkannt und bestimmt werden.

Im Folgenden werden bevorzugte Ausführungsbeispiele der vorliegenden Erfindung anhand der beigefügten Zeichnungen näher beschrieben.
Fig. 1 zeigt eine Gesamtansicht einer Kombinationswaage.
Fig. 2 zeigt eine Draufsicht auf einen Verteilteller und die Dosierrinnen einer Kombinationswaage.
Fig. 3 zeigt die Befüllungsvorrichtung für eine Kombinationswaage mit einem Sensor.
Fig. 4 zeigt eine Befüllungsvorrichtung für eine Kombinationswaage mit zwei Sensoren.
Fig. 5 zeigt die Unterteilung einer Beschickungsvorrichtung in Sektoren und Zonen.
Fig. 6a bis 6d zeigen unterschiedliche Unterteilungen von Verteiltellern, Dosierrinnen, Vorratsbehältern und Zusatzeinrichtungen in Sektoren und Zonen.
Fig. 7 zeigt die Messung mehrerer Punkte einer Dosierrinne mit einem Sensor.
Fig. 8 zeigt die Höhenberechnung eines gemessenen Produkts.
Fig. 9 zeigt die Berechnung von Hohlräumen zwischen zwei Produkten mit Hilfe des erfindungsgemäßen Sensors.
Fig. 10 zeigt die Volumenberechnung bei stückigen Produkten mit Messung von Hohlräumen mit Hilfe von jeweils zwei Sensoren.
Fig. 11 a) und Fig. 11 b) zeigen die Wanderung von Produktanhäufungen und Produkttälern mit der Zeit.
Fig. 12 zeigen die Erkennung von Unregelmäßigkeiten von Baugruppen bei einer Kombinationswägeeinrichtung, wobei hier in Fig. 12 a) eine Dosierrinne fehlt und in Fig. 12 b) die Beschickungsvorrichtung schief angeordnet ist.

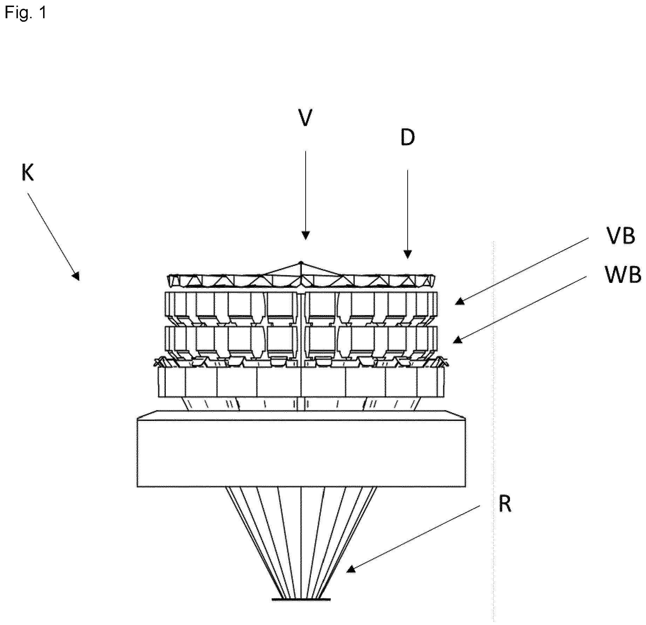

In Fig. 1 ist eine klassische Kombinationswaage K gemäß dem Stand der Technik gezeigt. Hier ist ein Verteilteller V vorhanden, von welchem Produkte auf Dosierrinnen D fallen können.

Am Ende der Dosierinnen sind Vorratsbehälter VB angeordnet, darunter entsprechende Wägebehälter WB. Diese können Produkte in eine Rutsche R abwerfen, von wo Produkte in eine Verpackungseinheit gelangen können.

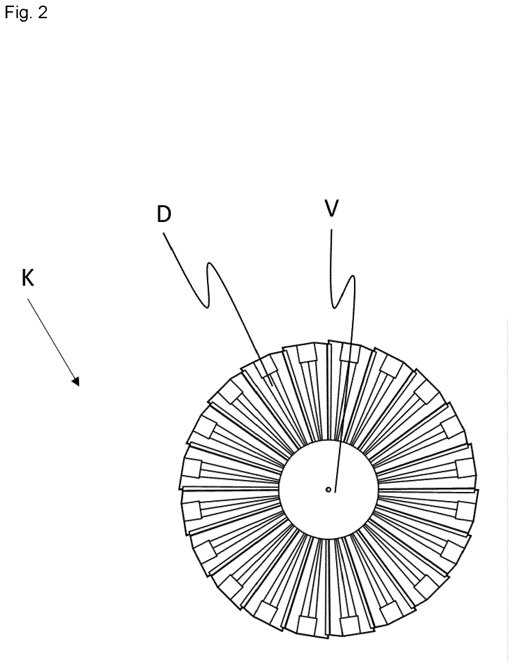

Fig. 2 zeigt eine Draufsicht auf eine Kombinationswaage K, wobei hier der Verteilteller V sowie die Anordnung der Dosierrinnen D um diesen herum ersichtlich ist.

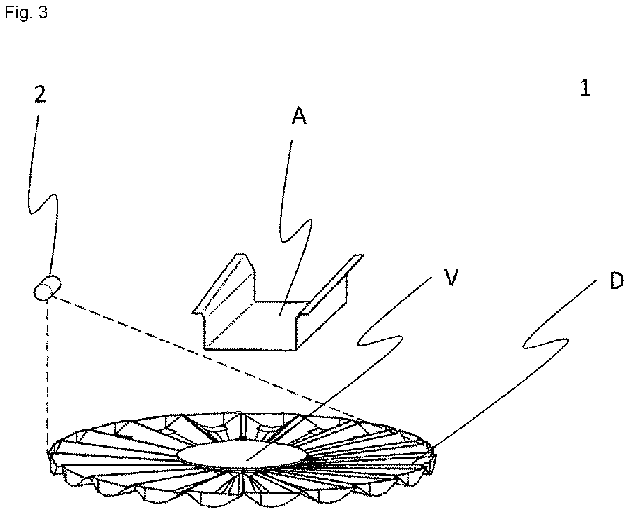

Fig. 3 zeigt eine Detailansicht einer Befüllungsvorrichtung 1. Diese besteht aus der Abwurfvorrichtung A, dem Verteilteller V sowie den Dosierrinnen D. An einer Stelle außerhalb der Dosierrinnen D ist ein Sensor 2 angeordnet, welcher in dem vorliegenden Fall den gesamten Verteilteller V sowie alle Dosierrinnen D überblickt.

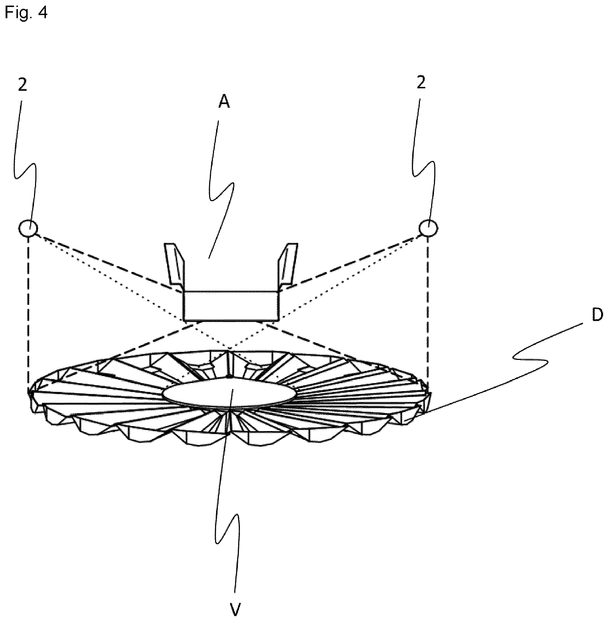

In Fig. 4 ist eine weitere Verteilvorrichtung 1, bestehend aus Abwurfvorrichtung A, Dosierrinnen D sowie Verteilteller V zu sehen. Jedoch sind hier zwei Sensoren 2 angebracht, diese überblicken sämtliche Dosierrinnen D sowie den Verteilteller V, wobei die von der Abwurfvorrichtung A für den einen Sensor 2 verdeckten Dosierrinnen D vom anderen Sensor erfasst werden.

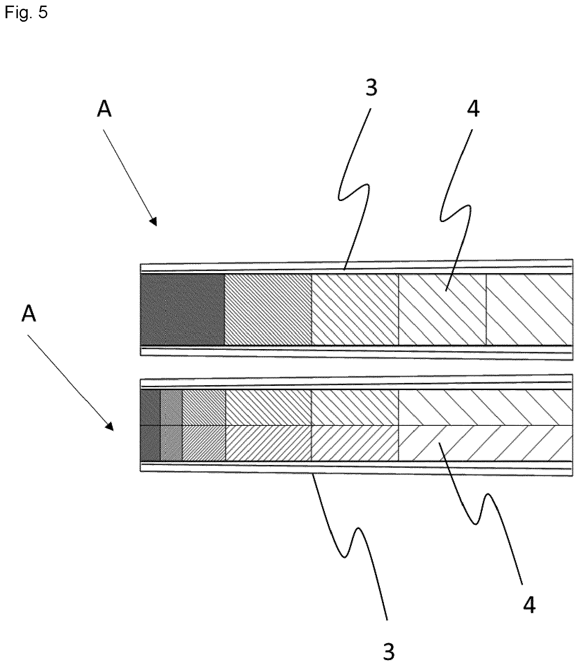

Fig. 5 zeigt die Einteilung zweier Abwurfvorrichtungen A in Sektoren 3 und Zonen 4 (hier zwei Möglichkeiten, einen Sektor 3 in verschiedene Zonen 4 zu unterteilen). In diesem Fall ist jeweils die gesamte Abwurfvorrichtung A ein Sektor 3, und der Sektor 3 ist in mehrere Zonen 4 unterteilt.

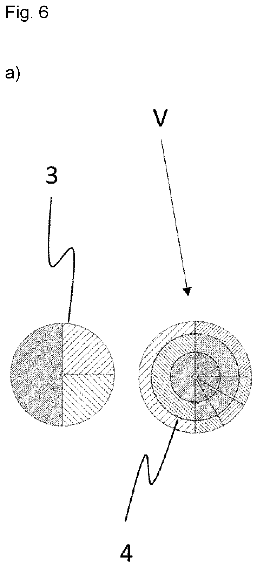

Fig. 6a zeigt eine Unterteilung eines Verteiltellers V, welcher ein Sektor 3 ist, in mehrere Zonen 4.

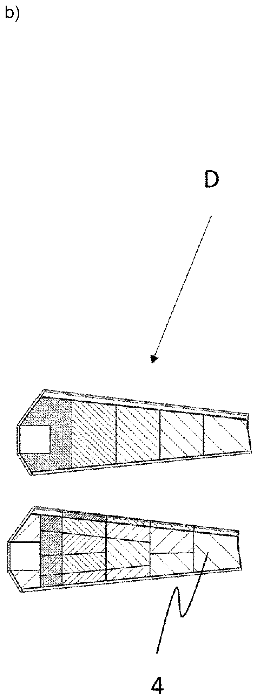

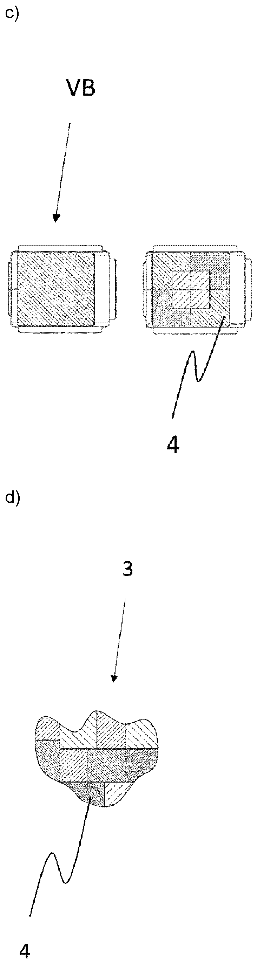

In Fig. 6b ist die Unterteilung einer Dosierrinne D, welche ein Sektor 3 ist, in mehrere Zonen 4 gezeigt, und in Fig. 6c ist die Unterteilung eines Vorratsbehälters VB, welcher ebenfalls einen Sektor 3 darstellt, in mehrere Zonen 4 gezeigt. In Fig. 6d ist eine Zusatzeinrichtung gezeigt, welche einen Sektor 3 darstellt. Dieser Sektor 3 ist in mehrere Zonen 4 unterteilt. Die Einteilung in Sektoren 3 und Zonen 4 kann dynamisch erfolgen, wie oben beschrieben. Es ist also auch möglich, außerhalb der eigentlichen Transportfläche der Kombinationswaage Sektoren und/oder Zonen anzulegen.

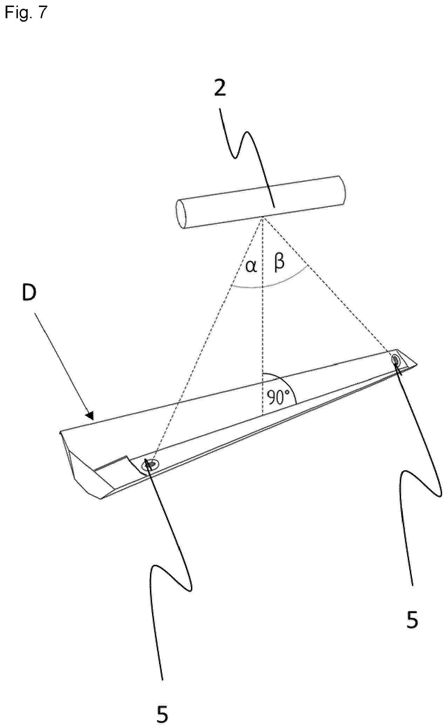

In Fig. 7 ist ein Sensor 2 gezeigt, welcher oberhalb einer Dosierrinne D angeordnet ist. An beiden Enden der Dosierrinne D ist eine Positioniermarke 5 angeordnet. Hier kann entsprechend ein Winkel α und β der einzelnen Positioniermarken 5 gemessen werden, und somit kann der Sensor 2 bestimmen, ob die Dosierrinne D richtig angeordnet ist. Genauer gesagt wird jeweils der Winkel zwischen der Verbindungslinie vom Sensor zur jeweiligen Positionsmarke 5 und dem Lot vom Sensor auf die Dosierrinne bestimmt. Der Sensor kann von einem Punkt aus messen (punktförmiger Sensor) oder auch von mehreren Punkten- daher ist er in Fig. 7 auch stabförmig ausgebildet.

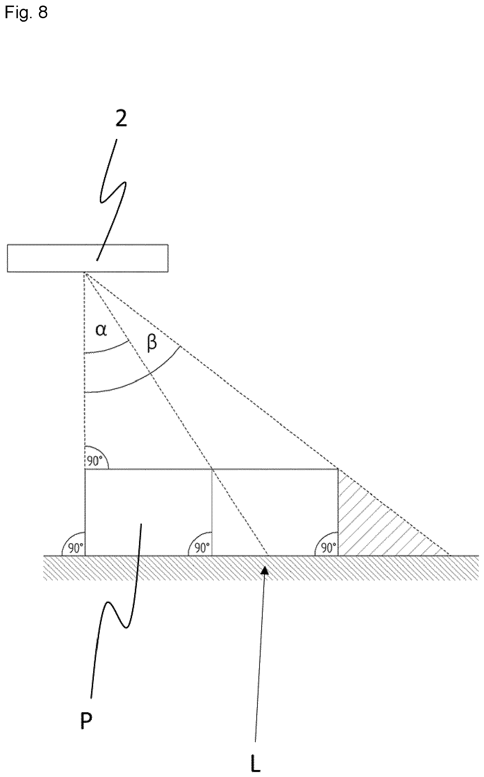

In Fig. 8 ist eine Volumenberechnung mit Winkelkorrektur bildlich dargestellt. Hier ist ersichtlich, dass mittels des Sensors 2 zumindest beide Ecken eines Produktteils P erfasst werden. Bei der in der Figur gezeigten linken Ecke erkennt der Sensor, dass diese genau auf dem Senklot vom Sensor auf der entsprechenden Fläche positioniert ist. Die andere Ecke ist in einem Winkel β von diesem angeordnet. Es wird ferner noch ein Zwischenpunkt gemessen, welcher mit dem Senklot einen Winkel α einschließt. Somit kann ein Volumen genau bestimmt werden, da ein Sensor hier an verschiedenen Punkten einen Winkel und eine Entfernung messen kann und daraus entsprechend die Höhe des Produkts P berechnen kann. Hier wird ohne Produkt der Untergrund gemessen (hier: der Punkt unter dem Senklot sowie Punkte mit den Winkeln α und β zum Senklot), und dann werden, wenn ein Produkt auf der Transportfläche liegt, dessen Ecken vermessen und die entsprechenden Distanzen mit den Gesetzen der Trigonometrie korrigiert (die gemessene Distanz entspricht hier der Hypotenuse, die tatsächliche Distanz der Ankathete)

Es ist auch möglich, ein Messfeld in konstanten Winkelschritten abzutasten und somit jedem Messpunkt ein Winkel zugeordnet wird. Wenn im Beispiel der Fig. 8 der Winkel β überschritten wird, würde ein sprunghafter Anstieg der gemessenen Distanz erfolgen - daher erkennt das System, dass beim Winkel β das Produktende vorhanden ist.

Für jeden der gemessenen Punkte kann eine Höheninformation ermittelt werden, woraus wiederum ein Gesamtvolumen berechenbar ist. Die Winkelkorrektur dient zur korrekten Erfassung der Höhe, Volumen, evtl. Hohlraumvolumina bzw. Schattenvolumina mit den entsprechenden Korrekturen und Schlussfolgerungen.

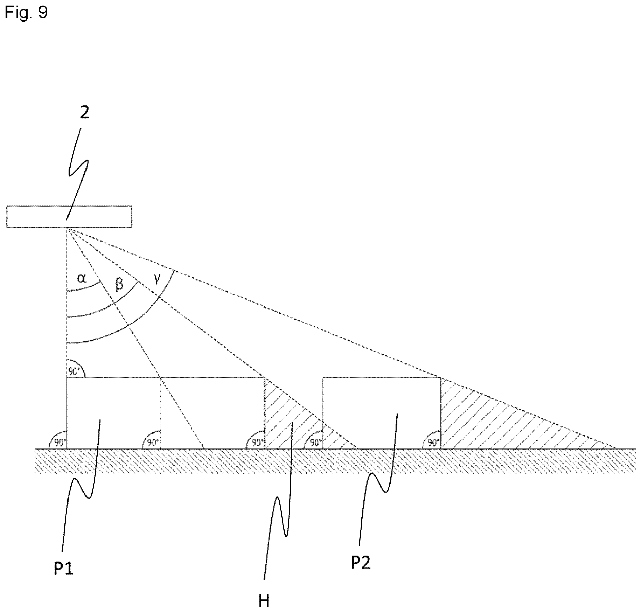

In Fig. 9 wird durch den Sensor 2 ebenfalls eine Volumenberechnung vorgenommen, hier allerdings bei stückigen Produkten P1 und P2. Das Messprinzip ist ähnlich wie in Fig. 8, jedoch werden beim Produkt P1 zwei verschiedene Winkel α und β gemessen, beim Produkt P2 ein dritter Winkel γ. Durch die einzelnen Entfernungen und Winkel kann bestimmt werden, wie hoch bestimmte Produkte nach oben ragen, und auch wenn diese schräg liegen, kann hier eine entsprechende Korrektur vorgenommen werden, so dass das tatsächliche Volumen ermittelt werden kann. Auch das Volumen des Leerraums (hier mit dem Bezugszeichen H dargestellt) kann zumindest teilweise vermessen werden (unter der Voraussetzung, dass die Produkte P1 und P2 rechtwinklig sind oder eine bekannte Form haben), so dass eine verwertbare Aussage über das Volumen des Leerraums H gewonnen werden kann. Dazu wird ähnlich wie in Fig. 8 die Distanz des entsprechenden Messpunkts vom Sensor 2 gemessen - und bei einem sprunghaften Anstieg der gemessenen Distanz kann das Produktende näherungsweise bestimmt werden - bzw. bei einem sprunghaften Fallen kann der Beginn eines neuen Produkts näherungsweise bestimmt werden.

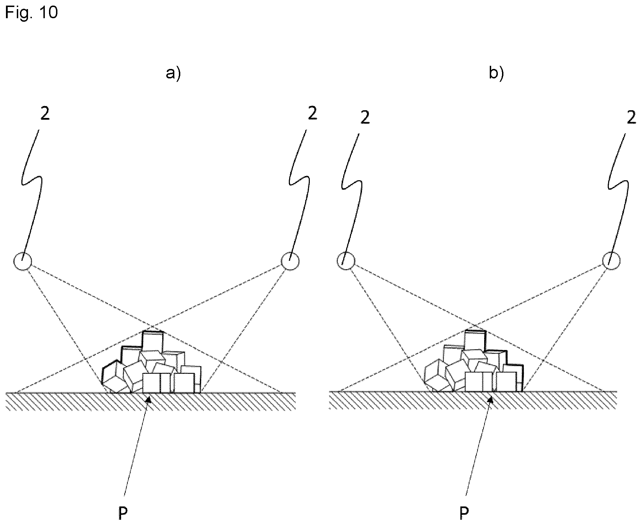

In Fig.10 a) und b) ist die Volumenberechnung bei einer Häufung von stückigen Produkten gezeigt. Hier kommen zwei Sensoren 2 zum Einsatz, welche die äußeren Konturen der Häufung der Produkte P abtasten. Hier soll möglichst genau versucht werden, die befüllten Bereiche sowie die Hohlräume zwischen den Produkten entsprechend zu detektieren und zu bestimmen, zumindest näherungsweise. Jeder der beiden Sensoren 2 tastet eine Seite der gehäuften Produkte P ab.

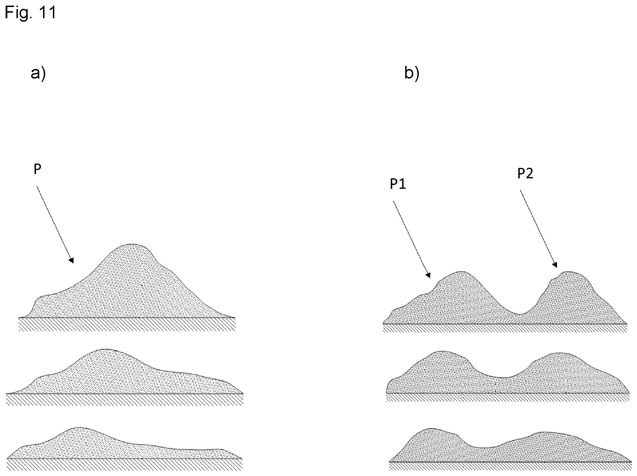

In Fig. 11 a) ist eine Produktanhäufung von kleinteiligem Produkt P gezeigt, hier beispielsweise Getreide. Hier kann beispielsweise die Wanderungsgeschwindigkeit der höchsten Stelle verfolgt werden. Durch die Vibration von Verteilteller und/oder Dosierrinnen verändert sich auch die Form des Produkts - es ist in allen Ansichten eine Spitze bzw. ein Berg zu erkennen, und dieser wandert; allerdings verändert sich eben auch die Form des Produkts.

In Fig. 11 b) sind zwei Produkthaufen P1 und P2 vorhanden, dazwischen befindet sich ein entsprechendes Tal oder eine Senke. Hier kann, indem diese Kontur erkannt und detektiert wird, das Bewegen bzw. das "Wandern" dieses Tals verfolgt werden.

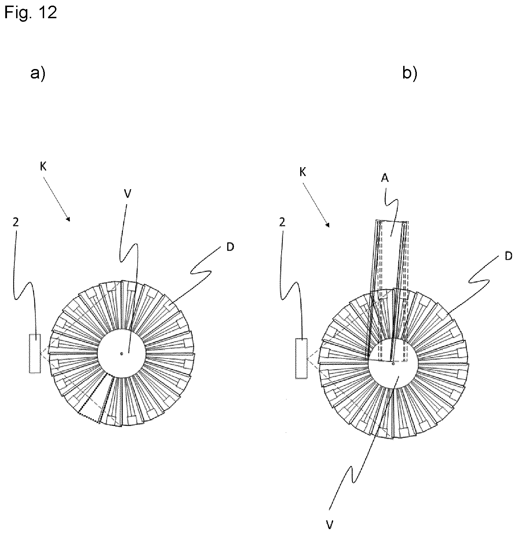

Fig. 12 a) zeigt nochmals eine Kombinationswaage K in Draufsicht, wobei hier eine Dosierrinne D fehlt. Da die Kombinationswaage vom Sensor 2 überblickt wird, kann der Sensor 2 das Fehlen dieser Dosierrinne D entsprechend erfassen und eine Fehlermeldung ausgeben.

In Fig. 12 b) ist ebenfalls eine Kombinationswaage K von oben gezeigt, wobei hier eine Abwurfvorrichtung A vorhanden ist, welche allerdings nicht wie eigentlich gewünscht gerade angeordnet ist und durch den Mittelpunkt des Verteilfeldes V verläuft, sondern schief. Auch dies kann vom Sensor 2 überblickt und entsprechend erfasst werden.

Die vorliegende Erfindung ist nicht auf die beschriebenen Ausführungsformen beschränkt.

Für die Berechnung von Hohlräumen und Wanderungsgeschwindigkeiten können auch komplexere Algorithmen zum Einsatz kommen, und es können hier viel detailliertere Detektionen vorgesehen werden.

Auch müssen nicht zwingend ein oder zwei Sensoren verwendet werden, wenn nötig können auch weit mehr Sensoren zum Einsatz kommen, so dass der ganze Verteilerbereich der Kombinationswaage pixelmäßig abgetastet wird.

Die vorliegende Erfindung beschäftigt sich mit einer Befüllungsvorrichtung 1 und einer Wägevorrichtung, wobei mindestens ein 3D-Sensor 2 dazu vorgesehen ist, zumindest eine Teilfläche der Transportfläche zu erfassen die erfasste Fläche virtuell in eine Mehrzahl von Sektoren 3 und Zonen 4 zu unterteilen. Der zumindest eine Sensor 2 ist dazu angepasst, einen Abstand zu dem Messpunkt sowie einen jeweiligen Einfallswinkel, unter welchem der Messpunkt der erfassten Fläche gemessen wird, zu bestimmen, und die Befüllungsvorrichtung 1 ist dazu angepasst, eine Einteilung in Sektoren 3 und Zonen 4 dynamisch in Abhängigkeit mindestens einer Einflussgröße E vorzunehmen, daraus relevante Informationen für die Regelung der Steuerparameter abzuleiten, um eine kontrollierte Produktverteilung zu erreichen.

## Patentansprüche

1. Befüllungsvorrichtung (1), insbesondere für eine Wägeeinrichtung, aufweisend:
eine Transportfläche (V, D, VB), die von einer Beschickungsvorrichtung (A) mit Produkten (P) versorgt wird,
wenigstens einen 3D-Sensor (2) zum Erfassen und Weiterleiten von Produktbelegungsinformationen auf der Transportfläche (V, D, VB) und/oder der Beschickungsvorrichtung (A) , sowie
eine Steuervorrichtung (ST) und eine Auswerteeinheit (AW), wobei der wenigstens eine 3D-Sensor (2) dazu angepasst ist,
zumindest eine Teilfläche der Transportfläche (V, D) oder der Beschickungsvorrichtung (A) zu erfassen und die Befüllungsvorrichtung (1) ausgebildet ist, die von dem wenigstens einen 3D-Sensor (2) erfasste Fläche virtuell in eine Mehrzahl an Sektoren (3) zu unterteilen, um die Produktbelegungsinformationen einem Sektor (3) zuzuordnen, und diesen virtuell in mehrere Zonen (4) zu unterteilen und mindestens einen Messpunkt auf der Transportfläche (V, D, VB) und/oder der Beschickungsvorrichtung (A) zu bestimmen,
**dadurch gekennzeichnet, dass** die Befüllungsvorrichtung (1) ferner dazu ausgebildet ist, einen Abstand zu dem Messpunkt sowie einen jeweiligen Einfallswinkel, unter welchem der Messpunkt der erfassten Fläche gemessen wird, zu bestimmen,
und die Befüllungsvorrichtung (1) dazu angepasst ist, eine Einteilung in Sektoren (3) und Zonen (4) auch dynamisch in Abhängigkeit mindestens einen Einflussgröße (E) vorzunehmen.

2. Befüllungsvorrichtung (1) gemäß Anspruch 1, wobei die Einflussgrößen (E) Charakteristika des zu transportierenden Produkts wie Produktdichte oder äußere Produktabmessungen sind.

3. Befüllungsvorrichtung (1) gemäß Anspruch 1 oder 2, wobei die Einflussgröße (E) die Vibrationsfrequenz und/oder Vibrationsamplitude von Teilen der Transportfläche (V, D) ist.

4. Befüllungsvorrichtung (1) gemäß einem der Ansprüche 1 bis 3, wobei die Steuervorrichtung dazu angepasst ist, dass die Einteilung in Sektoren (3) und Zonen (4) durch einen Benutzer beeinflussbar ist.

5. Befüllungsvorrichtung (1) gemäß einem der vorherigen Ansprüche, wobei an der Transportfläche (V, D) mindestens eine Positioniermarke (5) vorgesehen ist, und der Sensor (2) dazu angepasst ist, die mindestens eine Positioniermarke (5) zu erkennen.

6. Befüllungsvorrichtung (1) gemäß einem der vorherigen Ansprüche, wobei die Auswerteeinheit (AW) dazu angepasst ist, das Produktvolumen auf der Transportfläche ( V, D, VB), insbesondere in mindestens einem Vorratsbehälter (VB), auf Boden und Wänden mindestens einer Dosierrinne (D), auf dem Verteilteller (V), und/oder auf der Beschickungsvorrichtung (A) und anderen Teilen einer Kombinationswaage zu bestimmen.

7. Befüllungsvorrichtung (1) gemäß einem der vorherigen Ansprüche, wobei die Auswerteeinheit (AW) dazu angepasst ist, für die Bestimmung der Belegungshöhe und des Produktvolumens in den einzelnen Sektoren (3) und Zonen (5) einen entsprechenden Winkel des entsprechenden Messpunkts zu berücksichtigen.

8. Befüllungsvorrichtung (1) gemäß Anspruch 7, welche dazu angepasst ist, dass für die Bestimmung des Produktvolumens zusätzlich das Produktgewicht berücksichtigt wird, welches vorzugsweise auf einem Teil der Transportfläche (A, V, D) oder einem Vorratsbehälter (VB) einer Mehrkopfwaage bestimmt wird.

9. Befüllungsvorrichtung (1) gemäß einem der vorherigen Ansprüche, wobei der die Auswerteeinheit (AW) ferner dazu angepasst ist, die Produktbewegunsgeschwindigkeit auf der Transportfläche, vorzugsweise in einzelnen Sektoren (4) und/oder Zonen (5) zu bestimmen,
und vorzugsweise dazu angepasst ist, Schwankungen in der Produktbewegung und/oder den Produkteigenschaften zu detektieren.

10. Befüllungsvorrichtung (1) gemäß einem der vorherigen Ansprüche, wobei die Auswerteeinheit (AW) ferner dazu angepasst ist, Konturen von Produkten, Farben von Produkten sowie Oberflächenstrukturen von Produkten zu detektieren und zu analysieren.

11. Befüllungsvorrichtung (1) gemäß Anspruch 10, welche dazu angepasst ist, dass Konturen von Produkten, Farben von Produkten und Oberflächenstrukturen von Produkten in einer Speichereinheit (6) hinterlegbar sind, und durch einen Vergleich der gespeicherten Werte und der gemessenen Werte für die Konturen von Produkten, Farben von Produkten sowie Oberflächenstrukturen von Produkten Fremdkörper im Produktstrom detektierbar sind,
und Produkte und/oder Fremdkörper durch einen Vergleich mit hinterlegten Bilder oder, einer Bildauswertung, optional mithilfe von künstlicher Intelligenz, erkennbar sind.

12. Befüllungsvorrichtung (1) gemäß einem der vorhergehenden Ansprüche, wobei einer Speichereinheit (6) vorgesehen ist, in der die Abmessungen und die Positionierung des zu beobachtenden Bauteils der Befüllungsvorrichtung (1) hinterlegbar sind, beispielsweise als 3D-pdf, STEP-Datei oder digitaler Zwilling, und wobei die Auswerteeinheit (AW) dazu angepasst ist, relevante Punkte der erfassten Fläche zu erkennen und zu bestimmen, und wobei die Auswerteeinheit (AW) ferner dazu angepasst ist, vorzugsweise das Vorhandensein und/oder die richtige Positionierung von Teilen der Befüllungsvorrichtung und/oder Kombinationswaage, Baugruppen von Teilen und/oder optional vorgeschalteter bzw. nachgeschalteter Anlagen automatisch zu detektieren.

13. Befüllungsvorrichtung (1) gemäß einem der vorhergehenden Ansprüche, welche dazu angepasst ist, in Abhängigkeit der durch den mindestens einen Sensor (2) gemessene Produktbelegung eine Regelung der Steuerparameter der Befüllungsvorrichtung (1) wie beispielweise Dosierzeiten und Dosieramplituden vorzunehmen.

14. Verfahren zum Befüllen einer Kombinationswaage unter Verwendung einer Befüllungsvorrichtung (1) gemäß einem der Ansprüche 1 bis 13, umfassend die folgenden Schritte:
a) Verwenden von mindestens einem 3D-Sensors (2)
b) Bestimmen der Positionierung des mindestens einem 3D-Sensors (2) relativ zur Befüllungsvorrichtung (1);
c) Einteilung der Transportfläche in Sektoren (3) und/oder Zonen (4);
d) Analysieren von mindestens einem Teil einer Befüllungsvorrichtung (1) mit mindestens einem 3D-Sensor (2), wenn kein Produktfluss vorhanden ist;
e) Analysieren von mindestens einem Teil einer Befüllungsvorrichtung mit dem mindestens einen 3D-Sensor bei Produktfluss;
f) Vergleichen der mit dem mindestens einem 3D-Sensor gemessenen Daten der Schritte d) und e) und Plausibilitätsprüfung der in Schritt e) gemessenen Werte;
g) Bestimmen der Produktverteilung, eines Volumens und/oder Gewichts der transportierten Produkte

15. Verfahren gemäß Anspruch 14, ferner die folgenden Schritte umfassend:
h) Zuordnen der in Schritt g) erhaltenen Informationen vorbestimmten Sektoren (3) und Zonen(4),
i) Berechnen relevanter Merkmale der Produktverteilung aus diesen Informationen, wie Durchflussgrößen für Masse und Volumen, mittlere Dichte, Schwankungen der Produktverteilung wie Lücken oder Anhäufungen, Erkennen von Einzelstücken, Fremdobjekten, Störkanten, Vorhandensein bestimmter Merkmale wie Farbe, Form, Oberflächenstruktur, Anzahl.
j) Regelung der Steuerparameter der Kombinationswaage anhand dieser Informationen für eine kontrollierte Produktverteilung

16. Verfahren gemäß Anspruch 14 oder 15, wobei in Schritt d) und /oder e) größere Abweichungen innerhalb einer Zeitspanne Δt1 ignoriert werden, indem die betroffenen Messpunkte der entsprechenden Sektoren und/oder Zonen nicht für die Auswertung in Schritt e) verwendet werden.

17. Verfahren gemäß einem der Ansprüche 14 bis 16, wobei in Schritt d) und /oder e) Abweichungen der Distanzen zwischen Sensor und einzelnen Messpunkten über die Zeit bestimmt werden, wenn eine Zeitspanne Δt1 überschritten wird, und daraus ein Versatz berechnet wird,
und wenn der Versatz einen vorbestimmten Mindestwert nicht überschreitet, ein Korrekturwert für die Distanz zwischen dem Sensor und einem Meßpunkt bestimmt wird und für folgende Messungen verwendet wird,
und wenn der Versatz einen vorbestimmten Mindestwert überschreitet, entsprechende Messpunkte für folgende Messungen nicht mehr berücksichtigt werden.

18. Verfahren gemäß einem der Ansprüche 14 bis 17, wobei in den Schritten d) und e) ein Winkel jedes Messpunkts relativ zum Senklot des Sensors (2) sowie eine Distanz bestimmt werden und durch die Auswerteeinheit eine korrigierte Höhe eines Produkts bestimmt wird, welche die Bestimmung eines korrekten Produktvolumens erlaubt, und vorzugsweise durch Vergleich der gemessenen Distanzen zwischen mehreren Messpunkten Produktabmessungen und/oder Leerräume zwischen Produkten erkannt und bestimmt werden.

## Claims

1. Filling device (1), in particular for a weighing device, comprising
a transport surface (V, D, VB), which is supplied with products (P) by a feeding device (A),
at least one 3D sensor (2) for detecting and forwarding product occupation information on the transport surface (V, D, VB) and/or the feeding device (A), and
a control device (ST) and an evaluation unit (AW), wherein
the at least one §d-sensor (2) is adapted to
capture at least a partial area of the transport surface (V, D) or of the feeding device (A), and the filling device (1) is designed to virtually divide the surface detected by the at least one 3D-sensor (2) into a plurality of sectors (3) in order to assign the product occupation information to one sector (3) and to virtually divide it into several zones (4) and to determine at least one measuring point on the transport surface (V, D, VB) and/or the feeding device (A),
**characterized in that** the filling device (1) is further adapted to measure a distance to the measuring point as well as a respective angle of incidence under which the measuring point of the captured surface is measured,
and wherein the filling device (1) is adapted to perform a division into sectors (3) and zones (4) also dynamically in dependence on at least one influencing variable (E).

2. Filling device (1) according to claim 1, where the influencing variables (E) are characteristics of the product to be transported, such as product density or external product dimensions.

3. Filling device (1) according to claim 1 or 2, wherein the influencing variable (E) is the vibration frequency and/or vibration amplitude of parts of the transport surface (V, D).

4. Filling device (1) according to one of claims 1 to 3, wherein the control device is adapted so that the division into sectors (3) and zones (4) can be influenced by a user.

5. Filling device (1) according to one of the previous claims, wherein at least one positioning mark (5) is provided on the transport surface (V, D), and the sensor (2) is adapted to detect the at least one positioning mark (5).

6. Filling device (1) according to one of the previous claims, wherein the evaluation unit (AW) is adapted to determine the product volume on the transport surface (V, D, VB), in particular in at least one storage hopper (VB), on the floor and walls of at least one dosing chute (D), on the distribution plate (V) and/or on the feeding device (A) and other parts of a combination weighing machine.

7. Filling device (1) according to one of the previous claims, wherein the evaluation unit (AW) is adapted to take a corresponding angle of the corresponding measuring point into account for the determination of the occupation height and the product volume in the individual sectors (3) and zones (5).

8. Filling device (1) according to claim 7, which is adapted to additionally consider the product weight for the determination of the product volume, the product weight being preferably determined on a part of the transport surface (A, V, D) or a storage hopper (VB) of a multi-head scale.

9. Filling device (1) according to one of the previous claims, wherein the evaluation unit (AW) is further adapted to determine the product movement speed on the transport surface, preferably in individual sectors (4) and/or zones (5),
and is preferably adapted to detect variations in product movement and/or product properties.

10. Filling device (1) according to one of the previous claims, wherein the evaluation unit (AW) is further adapted to detect and analyze contours of products, colors of products as well as surface structures of products.

11. Filling device (1) according to claim 10, which is adapted to store contours of products, colors of products and surface structures of products in a memory unit (6), and to enable detecting foreign objects in the product stream by a comparison of the stored values and the measured values for the contours of products, colors of products and surface structures of products,
and to identify products and/or foreign objects by comparison with stored images or an image analysis, optionally using artificial intelligence.

12. Filling device (1) according to one of the preceding claims, wherein a memory unit (6) is provided in which the dimensions and the positioning of the component of the filling device (1) to be observed can be stored, for example as a 3D-pdf, STEP file or digital twin, to
and wherein the evaluation unit (AW) is adapted to detect and determine relevant points of the detected area,
and wherein the evaluation unit (AW) is further adapted to detect and determine preferably the presence and/or the correct positioning of parts of the filling device and/or combination scale, assemblies of parts and/or optionally upstream or downstream equipment automatically.

13. Filling device (1) according to one of the preceding claims, which is adapted to carry out a regulation of the control parameters of the filling device (1), such as for example dosing times and dosing amplitudes, in dependence of the product occupation measured by the at least one sensor (2).

14. Method of filling a combination scale using a filling device (1) according to one of claims 1 to 13, comprising the following steps:
a) Use of at least one 3D sensor (2)
b) Determining the positioning of the at least one 3D sensor (2) relative to the filling device (1);
c) Division of the transport area into sectors (3) and/or zones (4);
d) Analyzing at least one part of a filling device (1) with at least one 3D sensor (2) when there is no product flow;
e) Analyzing at least one part of a filling device with the at least one 3D sensor during product flow;
f) Comparison of the data measured with the at least one 3D sensor of steps d) and e) and plausibility check of the values measured in step e);
g) Determination of the product distribution, a volume and/or weight of the transported products.

15. The method according to claim 14, further comprising the following steps:
h) Assigning the information obtained in step g) to predetermined sectors (3) and zones (4),
i) Calculating relevant features of the product distribution from this information, such as flow rates for mass and volume, average density, variations in product distribution such as gaps or accumulations, detection of single pieces, foreign objects, interfering edges, presence of certain features such as color, shape, surface structure, number.
j) Regulation of the control parameters of the combination scale using this information for a controlled product distribution.

16. Method according to claim 14 or 15, whereby in step d) and/or e) major deviations within a time span Δt1 are ignored by not using the affected measuring points of the corresponding sectors and/or zones for the evaluation in step e).

17. Method according to one of claims 14 to 16, whereby in step d) and/or e) deviations of the distances between sensor and individual measuring points are determined over time if a time period Δt1 is exceeded, and an offset is calculated from this,
and if the offset does not exceed a predetermined minimum value, a correction value for the distance between the sensor and a measuring point is determined and used for subsequent measurements,
and if the offset exceeds a predetermined minimum value, corresponding measuring points are no longer considered for subsequent measurements.

18. Method according to one of claims 14 to 17, wherein in steps d) and e) an angle of each measuring point relative to the axis of incidence of the sensor (2) as well as a distance are determined, and a corrected height of a product is determined by the evaluation unit, which allows the determination of a correct product volume, and preferably product dimensions and/or empty spaces between products are detected and determined by comparing the measured distances between several measuring points.

## Revendications

1. Dispositif de remplissage (1), en particulier pour un appareil de pesée, présentant :
une surface de transport (V, D, VB), qui est alimentée en produits (P) par un dispositif de chargement (A),
au moins un capteur 3D (2) servant à détecter et à transférer des informations relatives à l'occupation par des produits sur la surface de transport (V, D, VB) et/ou sur le dispositif de chargement (A), ainsi
qu'un dispositif de commande (ST) et une unité d'évaluation (AW), dans lequel
l'au moins un capteur 3D (2) est adapté
pour détecter au moins une surface partielle de la surface de transport (V, D) ou du dispositif de chargement (A) et le dispositif de remplissage (1) est réalisé pour diviser la surface détectée par l'au moins un capteur 3D (2) virtuellement en une multitude de secteurs (3) pour associer les informations relatives à l'occupation par les produits à un secteur (3) et pour diviser celui-ci virtuellement en plusieurs zones (4) et pour définir au moins un point de mesure sur la surface de transport (V, D, VB) et/ou sur le dispositif de chargement (A),
**caractérisé en ce que** le dispositif de remplissage (1) est réalisé en outre pour définir une distance par rapport au point de mesure ainsi qu'un angle d'incidence respectif, auquel le point de mesure de la surface détectée est mesuré,
et le dispositif de remplissage (1) est adapté pour réaliser une répartition par secteurs (3) et zones (4) également de manière dynamique en fonction d'au moins une grandeur d'influence (E).

2. Dispositif de remplissage (1) selon la revendication 1, dans lequel les grandeurs d'influence (E) sont des caractéristiques du produit à transporter comme la densité de produit ou des dimensions de produit extérieures.

3. Dispositif de remplissage (1) selon la revendication 1 ou 2, dans lequel la grandeur d'influence (E) est la fréquence de vibration et/ou l'amplitude de vibration de parties de la surface de transport (V, D).

4. Dispositif de remplissage (1) selon l'une quelconque des revendications 1 à 3, dans lequel le dispositif de commande est adapté pour que la répartition en secteurs (3) et en zones (4) puisse être influencée par un utilisateur.

5. Dispositif de remplissage (1) selon l'une quelconque des revendications précédentes, dans lequel au moins une marque de positionnement (5) est prévue sur la surface de transport (V, D) et le capteur (2) est adapté pour identifier l'au moins une marque de positionnement (5).

6. Dispositif de remplissage (1) selon l'une quelconque des revendications précédentes, dans lequel l'unité d'évaluation (AW) est adaptée pour définir le volume de produit sur la surface de transport (V, D, VB), en particulier dans au moins un réservoir (VB), sur le fond et les parois d'au moins une rigole de dosage (D), sur le disque de distribution (V), et/ou sur le dispositif de chargement (A) et d'autres parties d'une balance de combinaison.

7. Dispositif de remplissage (1) selon l'une quelconque des revendications précédentes, dans lequel l'unité d'évaluation (AW) est adaptée pour tenir compte d'un angle correspondant du point de mesure correspondant pour la définition du niveau d'occupation et du volume de produits dans les divers secteurs (3) et zones (5).

8. Dispositif de remplissage (1) selon la revendication 7, lequel est adapté pour prendre en compte, pour la définition du volume du produit, en supplément le poids de produits, lequel est défini de préférence sur une partie de la surface de transport (A, V, D) ou sur un réservoir (VB) d'une balance à têtes multiples.

9. Dispositif de remplissage (1) selon l'une quelconque des revendications précédentes, dans lequel l'unité d'évaluation (AW) est adaptée en outre pour définir la vitesse de déplacement des produits sur la surface de transport, de préférence dans divers secteurs (4) et/ou zones (5)
et/ou est adaptée de préférence pour détecter des fluctuations dans le déplacement des produits et/ou dans les propriétés des produits.

10. Dispositif de remplissage (1) selon l'une quelconque des revendications précédentes, dans lequel l'unité d'évaluation (AW) est adaptée en outre pour détecter et analyser des contours de produits, des couleurs de produits ainsi que des structures superficielles de produits.

11. Dispositif de remplissage (1) selon la revendication 10, lequel est adapté pour pourvoir enregistrer dans une unité de mémoire (6) des contours de produits, des couleurs de produits et des structures superficielles de produits, et des corps étrangers peuvent être détectés dans le flux de produits par une comparaison des valeurs mémorisées et des valeurs mesurées pour les contours de produits, les couleurs de produits ainsi que les structures superficielles de produits,
et des produits et/ou des corps extérieurs peuvent être identifiés en option à l'aide d'une intelligence artificielle par une comparaison à des images enregistrées ou à une analyse d'image.

12. Dispositif de remplissage (1) selon l'une quelconque des revendications précédentes, dans lequel est prévue une unité de mémoire (6), dans laquelle les dimensions et le positionnement du composant à observer du dispositif de remplissage (1) peuvent être enregistrés, par exemple en tant que fichier 3D-pdf, fichier STEP ou en tant que jumeau numérique, et dans lequel l'unité d'évaluation (AW) est adaptée pour identifier et définir des points importants de la surface détectée, et dans lequel l'unité d'évaluation (AW) est adaptée en outre pour détecter automatiquement de préférence la présence et/ou le bon positionnement de parties du dispositif de remplissage et/ou de la balance de combinaison, de groupes de parties et/ou en option d'installations montées en amont ou en aval.

13. Dispositif de remplissage (1) selon l'une quelconque des revendications précédentes, lequel est adapté pour réaliser, en fonction de l'occupation par les produits mesurée par l'au moins un capteur (2), une régulation des paramètres de commande du dispositif de remplissage (1) comme les temps de dosage et les amplitudes de dosage.

14. Procédé de remplissage d'une balance de combinaison en utilisant un dispositif de remplissage (1) selon l'une quelconque des revendications 1 à 13, comprenant les étapes suivantes :
a) l'utilisation d'au moins un capteur 3D (2),
b) la définition du positionnement de l'au moins un capteur 3D (2) par rapport au dispositif de remplissage (1) ;
c) la répartition de la surface de transport en secteurs (3) et/ou en zones (4) ;
d) l'analyse d'au moins une partie du dispositif de remplissage (1) avec au moins un capteur 3D (2) en l'absence d'un flux de produits ;
e) l'analyse d'au moins une partie du dispositif de remplissage avec l'au moins un capteur 3D en présence d'un flux de produits ;
f) la comparaison des données mesurées avec l'au moins un capteur 3D de l'étape d) et e) et le contrôle de plausibilité des valeurs mesurées à l'étape e) ;
g) la définition de la distribution de produits, d'un volume et/ou d'un poids des produits transportés.

15. Procédé selon la revendication 14, comprenant en outre les étapes suivantes :
h) l'association des informations obtenues lors de l'étape g) à des secteurs (3) et zones (4) prédéfinis,
i) le calcul de caractéristiques importantes de la distribution de produits sur la base desdites informations, comme les grandeurs de débit pour la masse et le volume, la densité moyenne, les fluctuations de la distribution de produits comme des pénuries ou des accumulations, l'identification de pièces individuelles, d'objets extérieurs, de bords saillants, la présence de caractéristiques données comme la couleur, la forme, la structure superficielle, le nombre.
j) la régulation des paramètres de commande de la balance de combinaison à l'aide desdites informations pour une distribution de produits contrôlée.

16. Procédé selon la revendication 14 ou 15, dans lequel des écarts plus importants dans un laps de temps Δt1 sont ignorés à l'étape d) et/ou à l'étape e) en ce que les points de mesure concernés des secteurs et/ou zones correspondants ne sont pas utilisés pour l'évaluation à l'étape e).

17. Procédé selon l'une quelconque des revendications 14 à 16, dans lequel des écarts des distances entre le capteur et les divers points de mesure sont définis sur le temps à l'étape d) et/ou e) quand un laps de temps Δt1 est dépassé, et un décalage est calculé sur cette base,
et quand le décalage ne dépasse pas une valeur minimale prédéfinie, une valeur de correction est définie pour la distance entre le capteur et un point de mesure et est utilisée pour des mesures suivantes,
et quand le décalage dépasse une valeur minimale prédéfinie, des points de mesure correspondants ne sont plus pris en compte pour des mesures suivantes.

18. Procédé selon l'une quelconque des revendications 14 à 17, dans lequel un angle de chaque point de mesure par rapport à un fil à plomb du capteur (2) ainsi qu'une distance sont définis aux étapes d) et e) et l'unité d'évaluation définit une hauteur corrigée d'un produit, laquelle permet la définition d'un volume de produits correct, et des dimensions de produits et/ou des espaces vides entre des produits sont identifiés et définis de préférence par comparaison des distances mesurées entre plusieurs points de mesure.
